Europäisches Patentamt

European Patent Office

Office européen des brevets

(19)

(11) **EP 0 559 561 B1**

(12)

# FASCICULE DE BREVET EUROPEEN

(45) Date de publication et mention
de la délivrance du brevet:
**04.06.1997 Bulletin 1997/23**

(51) Int Cl.6: **G21C 19/46**, C22B 60/04

(21) Numéro de dépôt: **93400552.1**

(22) Date de dépôt: **03.03.1993**

(54) **Procédé de dissolution du bioxyde de plutonium au moyen de radicaux OH' produits par radiolyse de l'eau, utilisable pour le traitement des fines de dissolution et des déchets plutonifères**

Verfahren zur Auflösung von Plutonium Dioxid mittels OH'Radikalen durch Wasserradiolyse erhalten, anwendbar für die Behandlung von Plutonium-enthaltenden Schlämmen und Abfällen

Process for the dissolution of plutonium dioxide with OH'radicals obtained by the radiolysis of water, usable for treating plutonium containing slimes and wastes

(84) Etats contractants désignés:
**BE DE GB**

(30) Priorité: **05.03.1992 FR 9202651**

(43) Date de publication de la demande:
**08.09.1993 Bulletin 1993/36**

(73) Titulaire: **COMMISSARIAT A L'ENERGIE ATOMIQUE**
**75015 Paris (FR)**

(72) Inventeur: **Madic, Charles**
**F-94320 Thiais (FR)**

(74) Mandataire: **Des Termes, Monique et al**
**Société Brevatome**
**25, rue de Ponthieu**
**75008 Paris (FR)**

(56) Documents cités:
**EP-A- 0 158 555**          **US-A- 4 172 775**

- **CHEMICAL ABSTRACTS, vol. 114 Columbus, Ohio, US; abstract no. 132888c, ANDREICHUK ET AL. 'plutonium(III) oxidation under alpha-irradiation in nitric acid solutions' page 704 , colonne 2**

# Description

La présente invention a pour objet un procédé de dissolution du bioxyde de plutonium présent dans des produits solides.

Elle s'applique en particulier à des produits solides constitués par des lots de $PuO_2$ ou d'oxydes mixtes (U, Pu)$O_2$ impurs, à recycler, provenant d'installations de fabrication des nouveaux combustibles nucléaires à base de plutonium destinés aux réacteurs à neutrons rapides ou aux réacteurs à eau légère (combustibles MOX), ainsi qu'à des déchets plutonifères tels que les fines de dissolution des combustibles irradiés, les cendres d'incinération et les déchets divers tels que les déchets de procédés, les déchets technologiques et les déchets de laboratoires.

Les procédés actuellement utilisés pour dissoudre le bioxyde de plutonium peuvent être classés en trois grandes catégories qui sont :

a) les procédés sans changement d'état d'oxydation du plutonium qui reste à l'état de Pu(IV),
b) les procédés par réduction qui réalisent la réduction du plutonium sous forme de Pu(III), et
c) les procédés par oxydation qui conduisent à l'obtention d'ions Pu(VI) en solution.

Les procédés appartenant à la première catégorie, tels que celui décrit dans J.M. CLEVELAND "The Chemistry of Plutonium" Gordon and Breach Ed. 1970, consistent à attaquer les produits solides par un mélange d'acide nitrique concentré et d'acide fluorhydrique, à l'ébullition à reflux. Bien que ces procédés soient utilisés industriellement, ils ont l'inconvénient d'utiliser des réactifs hautement corrosifs, en raison de la présence des ions fluor.

Les procédés par réduction appartenant à la deuxième catégorie, tels que celui décrit dans EP-A-312 433, consistent à réaliser la dissolution en milieu sulfurique, sous l'action de réducteurs puissants qui sont de préférence générés par électrolyse pour permettre une économie de réactif. Ces procédés, bien que satisfaisants, impliquent néanmoins l'emploi d'un appareillage complexe (électrolyseur) difficile à utiliser pour certaines applications.

Les procédés par oxydation appartenant à la troisième catégorie tels que celui décrit dans EP-A- 0 158 555, consistent à réaliser l'oxydation du plutonium au moyen d'oxydants forts tels que l'argent (II) régénéré par électrolyse ; ils présentent donc également l'inconvénient de nécessiter l'emploi d'un appareillage complexe (électrolyseur).

Le document Chemical Abstracts, vol 114, 1991, n° 132888c, p 704, illustre un procédé d'oxydation de Pu (III) en solution nitrique au moyen de rayonnements $\alpha$ de haute énergie pour le transformer en Pu(IV), mais il ne s'agit pas de dissoudre du $PuO_2$ solide.

La présente invention a précisément pour objet un procédé de dissolution du bioxyde de plutonium par oxydation qui ne nécessite pas l'emploi d'un appareillage complexe tel qu'un électrolyseur.

Selon l'invention, le procédé de dissolution du bioxyde de plutonium présent dans des produits solides, consiste

a) à mettre en contact les produits solides avec une solution aqueuse d'acide nitrique soumise à des rayonnements ou à des particules chargées pour produire des radicaux libres OH· par radiolyse de cette solution, en présence d'un réactif capable de piéger les espèces très réductrices, telles les électrons solvatés et les radicaux H· produits simultanément, et
b) à récupérer la solution aqueuse nitrique dans laquelle a été dissous le plutonium.

Dans ce procédé, on utilise le pouvoir oxydant des radicaux libres OH· produits "in situ" par radiolyse de l'eau pour oxyder le plutonium (IV) en plutonium (VI) et l'amener en solution.

En effet, le radical OH· est une espèce très oxydante, qui participe à un couple redox de potentiel très élevé : 2,6V/ENH. Il est produit lors de la radiolyse de l'eau, au moyen de rayonnements tels que des rayonnements alpha, bêta, gamma ou d'autres particules chargées telles que les électrons. Le rendement radiolytique $G_{OH·}$ qui correspond au nombre de particules créées pour une énergie absorbée dans l'eau égale à 100eV, est voisin de 6, mais d'autres espèces primaires sont produites par la radiolyse de l'eau, en particulier l'électron solvaté $e^-_{solv}$ qui est une espèce très réductrice, formée en quantité égale à celle du radical OH· ; ces espèces qui ont une durée de vie très brève, évoluent rapidement pour créer des produits de radiolyse secondaires constitués par $O_2$, $H_2$ et $H_2O_2$.

Selon l'invention, on impose une condition très oxydante à la solution aqueuse, en effectuant la radiolyse en présence d'un réactif capable de piéger les électrons solvatés et les radicaux H· produits simultanément, pour que ceux-ci ne réagissent pas avec les radicaux OH· et que la population de radicaux OH· créés puisse être employée pour les réactions d'oxydation voulues du plutonium (IV) en plutonium (VI).

Le réactif capable de piéger les électrons solvatés et les radicaux H· peut être en particulier le protoxyde d'azote $N_2O$.

Selon un mode de réalisation préféré de l'invention, la solution aqueuse nitrique comprend de plus un médiateur redox, ayant un potentiel d'oxydoréduction compris entre 1,43 et 2,6V/ENH.

La présence en solution aqueuse nitrique d'un tel médiateur redox permet d'utiliser les radicaux OH· produits par radiolyse pour oxyder la forme réduite de ce médiateur, celui-ci étant utilisé ensuite pour oxyder le plutonium et le dissoudre dans la solution.

La présence d'un tel médiateur est particulièrement intéressante pour le traitement de déchets plutonifères. En effet, dans le cas de ces déchets, le contact entre le réactif oxydant (OH·) et le grain de $PuO_2$ ne se manifeste que quelque temps après la production "in situ" des radicaux OH·, car il faut que ces radicaux diffusent vers le site à attaquer. Ceci peut se traduire par une perte non négligeable de réactif car les radicaux CH· ont une faible durée de vie.

Afin de pallier cet inconvénient, on utilise les radicaux OH· pour convertir en oxydant puissant la forme réduite d'un médiateur redox présent en solution qui sera capable d'oxyder le Pu(IV) en Pu(VI) plus facilement.

Les médiateurs redox susceptibles d'être utilisés, sont en particulier Ag(I), Ce(III) et Co(II). Cependant, dans le cas de l'emploi de Ce(III) ou de Co(II), il est nécessaire d'opérer à température élevée pour obtenir une cinétique d'attaque du $PuO_2$ utilisable. En revanche, avec l'argent on peut opérer à la température ambiante.

Selon l'invention, les rayonnements utilisés pour produire les radicaux libres OH· par radiolyse de l'eau peuvent être des rayonnements alpha, des rayonnements bêta, des rayonnements gamma, ou encore des particules chargées telles que des électrons.

Dans le cas où l'on utilise des rayonnements alpha, ceux-ci peuvent être produits directement dans la solution par les nuclides de plutonium 238 présents dans les produits solides à dissoudre. On peut aussi utiliser comme rayonnements alpha, les rayonnements produits par un émetteur alpha ajouté à la solution aqueuse nitrique.

A titre d'exemple d'émetteurs alpha utilisables, on peut citer l'américium-241, le curium-244, et les nuclides de plutonium.

Lorsque l'on utilise des rayonnements β⁻ ceux-ci peuvent être produits par un émetteur β⁻ dissous dans la solution aqueuse nitrique, par exemple du strontium 90 ou de l'yttrium 90.

Les rayonnements utilisés peuvent aussi être produits par une source de rayonnement externe à la solution, par exemple à partir d'un irradiateur tel qu'une source de cobalt.

On peut encore utiliser des particules chargées telles que des électrons produits par un accélérateur d'électrons.

Les produits solides susceptibles d'être traités par le procédé de l'invention, peuvent être constitués par divers produits. Ainsi, il peut s'agir d'oxyde de plutonium ou d'oxyde mixte de plutonium tel que des lots de $PuO_2$ impurs et les lots de combustibles à base d'oxyde mixte mal préparé. Il peut aussi s'agir de divers types de déchets tels que les fines de dissolution des combustibles irradiés, les cendres d'incinération, les déchets organiques d'ivers produits lors des opérations de retraitement des combustibles nucléaires ou de préparations des combustibles au plutonium, par exemple les déchets technologiques et les déchets de laboratoires, notamment les déchets en matériaux organiques tels que des matières plastiques et cellulosiques contaminées par du plutonium.

Dans le cas où les produits solides à traiter sont des déchets, il est préférable d'utiliser comme source de rayonnement, une source externe telle qu'un irradiateur ou un accélérateur d'électrons.

Pour mettre en oeuvre le procédé de l'invention, on peut réaliser la mise en contact dans un réacteur rempli d'une solution aqueuse nitrique saturée de $N_2O$, contenant éventuellement un médiateur redox tels que du nitrate d'argent.

La concentration en acide nitrique de la solution est avantageusement de 2 à 6mol/l.

Lorsque la solution comprend de l'argent, la concentration en argent est de préférence de 0,01 à 0,1mol/l.

Avantageusement, on opère en continu, en introduisant en continu dans le réacteur la solution nitrique et les produits solides contenant le plutonium à dissoudre, et en soutirant en continu du réacteur la solution aqueuse contenant du plutonium en solution.

A titre d'exemple, on peut introduire en continu dans un réacteur contenant une solution aqueuse nitrique comprenant l'émetteur alpha ou bêta, les produits solides contenant le plutonium à dissoudre, de l'acide nitrique et l'agent capable de piéger les électrons solvatés et les radicaux H·, soutirer en continu du réacteur une partie de la solution, séparer de la solution soutirée le plutonium qu'elle contient pour obtenir une solution appauvrie en Pu et recycler dans le réacteur la solution ainsi appauvrie en plutonium.

Le plutonium peut être séparé de la solution aqueuse par des procédés classiques, par exemple par extraction dans un solvant organique tel que le tributyl phosphate.

D'autres caractéristiques et avantages de l'invention apparaîtront mieux à la lecture des exemples suivants donnés bien entendu à titre illustratif et non limitatif en référence au dessin annexé sur lequel :

- la figure 1 représente de façon schématique une installation pour réaliser la dissolution en continu du bioxyde de plutonium,
- la figure 2 représente schématiquement une installation de dissolution en continu du $PuO_2$ en présence d'un émetteur alpha ajouté à la solution nitrique,
- la figure 3 représente schématiquement une installation de récupération du bioxyde de plutonium présent dans les fines de dissolution, et
- la figure 4 représente un autre mode de réalisation d'une installation de traitement des fines de dissolution.

## Exemple 1.

Dans cet exemple, on réalise la dissolution d'une poudre de $^{238}PuO_2$ en milieu nitrique en utilisant comme émetteur alpha le $^{238}Pu$ de l'oxyde à dissoudre.

Dans ce but, on introduit par exemple 100g de la poudre de $^{238}PuO_2$ dans 1 litre d'une solution aqueuse d'acide nitrique à 6mol/l, saturée en $N_2O$. Après environ 28h de contact à la température ambiante, on peut obtenir la dissolution totale de l'oxyde de plutonium $^{238}PuO_2$.

Après dissolution, le plutonium est sous forme de Pu(VI), mais il peut être réduit en Pu(IV) par traitement avec des vapeurs nitreuses, puis réextrait de la solution aqueuse par un solvant organique, par exemple en employant le procédé PUREX ou une extraction liquide-liquide à l'aide d'un nitrate d'amine tertiaire. La présence de $N_2O$ dans la solution aqueuse de dissolution est sans conséquence aucune sur les procédures chimiques mises en oeuvre ultérieurement.

Dans cet exemple, on utilise ainsi les rayonnements alpha émis par le plutonium 238 pour créer dans la solution aqueuse un flux de radicaux OH· provoquant la dissolution du $PuO_2$.

On sait qu'un rayon alpha de 5,5MeV qui dépose son énergie dans la solution aqueuse dans laquelle baigne la poudre de $^{238}PuO_2$, crée $3,3.10^5$ radicaux OH·, ce qui correspond à un rendement $G_{OH·} = 6$.

Ainsi, les rayons alpha de 5,5 MeV provenant d'une source de 1Ci sont susceptibles de provoquer la dissolution de 9,8mg de $PuO_2$/h conformément à la réaction de dissolution :

$$PuO_2 = 2OH· \rightarrow PuO_2^{2+} + 2OH^-$$

L'activité spécifique du plutonium 238 est égale à 17Ci/g ; en conséquence, les rayonnements alpha émis par 1 gramme de $^{238}Pu$ créent un flux de radicaux OH· capable de provoquer la dissolution de 166,6mg de $PuO_2$/h.

Si tous les radicaux OH· étaient utilisés, on devrait obtenir la dissolution complète en environ 7h. Cependant, dans la pratique, seule une fraction des rayons alpha est susceptible d'émerger du grain de $^{238}PuO_2$ (le parcours d'un rayon alpha dans $PuO_2$ est voisin de 3,5μm) ; il en résulte donc une perte d'efficacité d'un facteur 2. Par ailleurs, toute la population de radicaux OH· créés en solution ne parvient pas au site de la réaction ; il se produit encore ici une perte d'efficacité d'un facteur 2. De ce fait, la dissolution totale de l'oxyde de plutonium est obtenue en environ 28h.

## Exemple 2.

Dans cet exemple, on réalise la dissolution de $^{238}PuO_2$ en utilisant comme source de rayonnement, les rayonnements alpha émis par $^{238}Pu$, mais on opère en présence d'un médiateur redox dans la solution aqueuse.

Dans ce but, on introduit par exemple 100g de poudre de $^{238}PuO_2$ dans un litre d'une solution aqueuse nitrique à 6mol/l d'acide nitrique, saturée en $N_2O$ et comprenant 0,1mol/l de nitrate d'argent. Après environ 14h à la température ambiante, on observe que la totalité de la poudre de $^{238}PuO_2$ a été dissoute dans la solution.

Dans les conditions de cet exemple, les radicaux OH· créés, dont la durée de vie est faible, sont convertis en ions Ag(II) plus stables qui diffusent dans la solution et induisent la dissolution de l'oxyde de plutonium. Dans ces conditions, aucune perte d'efficacité n'est observée, hormis celle correspondant aux rayonnements alpha qui perdent leur énergie dans le solide $^{238}PuO_2$.

## Exemple 3.

Dans cet exemple, on utilise également les rayonnements alpha provenant de nuclides du plutonium pour dissoudre par exemple 100g de $PuO_2$ provenant du retraitement de combustibles du type UOX. Dans ce cas, l'activité spécifique du plutonium est voisine de 0,5Ci/g et l'énergie moyenne des rayonnements alpha est proche de 5,43MeV.

On disperse par exemple 100g de $PuO_2$ dans un litre d'une solution aqueuse nitrique à 6 mol/l, saturée en $N_2O$. Après environ 40 jours à la température ambiante, on observe la dissolution complète du $PuO_2$.

Dans ce cas, les rayons alpha émis par les nucléides de Pu contenus dans l'oxyde ont la capacité de provoquer la dissolution d'environ 4,3mg de $PuO_2$/h/g d'oxyde, étant donné qu'une source de 1Ci de rayonnement alpha de 5,43MeV induit la dissolution de 9,7mg de $PuO_2$/h.

La dissolution totale pourrait donc intervenir en environ 240h. Cependant, des chutes d'efficacité liées à la déperdition des rayonnements alpha dans le solide et à la perte de radicaux OH· induisent un temps global de dissolution important puisqu'il est environ de 960h, soit environ 40j.

## Exemple 4.

Dans cet exemple, on suit le même mode opératoire que dans l'exemple 3 pour dissoudre 100g d'oxyde de plutonium $PuO_2$ provenant de combustibles du type UOX, mais on ajoute à la solution aqueuse du nitrate d'argent à raison de 0,1mol/l.

Dans ce cas, on peut obtenir la dissolution totale de l'oxyde de plutonium $PuO_2$ en environ 20 jours.

## Exemple 5.

Dans cet exemple, on réalise la dissolution d'oxyde de plutonium $^{238}PuO_2$ en ajoutant à la solution aqueuse du plutonium-238 pour obtenir une activité totale plus importante, par exemple 5000Ci.

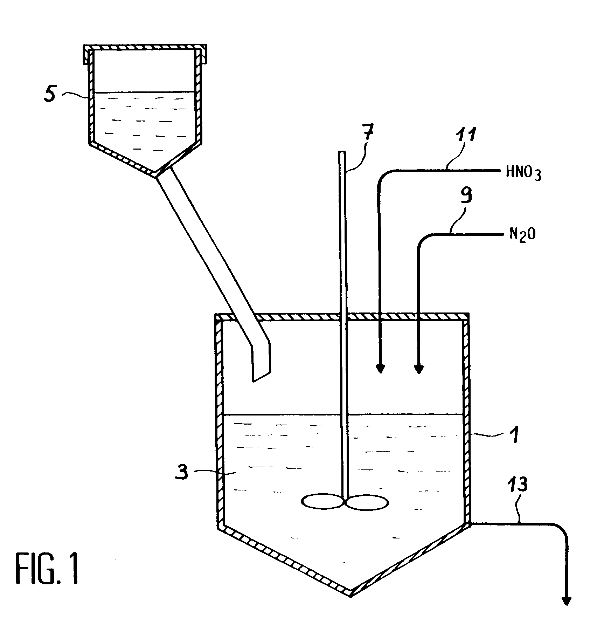

Dans ce cas, on utilise une solution aqueuse à 6mol/l d'acide nitrique, saturée de $N_2O$, contenant de plus 100g/l de $^{238}Pu$, et on réalise la dissolution en continu dans l'installation représentée sur la figure 1.

Dans cette installation, on voit que le réacteur d'attaque (1) contient une solution aqueuse (3) d'acide nitrique et de plutonium saturé de $N_2O$. On introduit dans

cette solution à partir de la trémie d'alimentation (5) le PuO$_2$ à dissoudre au débit voulu et on soumet l'ensemble à une agitation au moyen de l'agitateur (7). On introduit également dans le réacteur par la conduite (9) du N$_2$O et par la conduite (11) de l'acide nitrique 6N. On soutire par ailleurs du réacteur par la conduite (13) la solution de dissolution.

Dans ce cas, la présence de $^{238}$Pu dans la solution aqueuse de départ permet d'obtenir une capacité de dissolution voisine de 25g/h. Pour le fonctionnement en continu, on règle les débits d'introduction de PuO$_2$, de HNO$_3$ et le débit de soutirage de la solution de façon telle que la solution aqueuse présente dans le réacteur (1) ait toujours la concentration voulue en plutonium-238, pour obtenir une vitesse de dissolution acceptable.

**Exemple 6.**

Dans cet exemple on dissout l'oxyde de plutonium provenant d'un combustible UOX en ajoutant également à la solution aqueuse nitrique du plutonium, par exemple du plutonium de même composition isotopique que celle du combustible UOX à dissoudre, pour accélérer la dissolution.

On peut réaliser l'opération de dissolution également dans l'installation représentée sur la figure 1 en ajoutant au départ 5000g de plutonium pour que la solution saturée de N$_2$O contenue dans le réacteur ait une activité totale de 5000Ci. Dans ces conditions, on obtient également la dissolution de 25g/h d'oxyde de plutonium.

**Exemple 7.**

Dans cet exemple, on suit le même mode opératoire que dans l'exemple 5 pour dissoudre en continu du $^{238}$PuO$_2$, mais l'on ajoute de plus à la solution d'attaque un médiateur redox constitué par du nitrate d'argent à raison de 0,1mol/l. On introduit également 0,1mol/l de nitrate d'argent dans la solution nitrique d'alimentation introduite par la conduite (11).

L'adjonction de nitrate d'argent permet d'obtenir une capacité de dissolution de 47 à 48g/h de PuO$_2$.

**Exemple 8.**

Dans cet exemple, on utilise comme source de production des radicaux OH·, les rayonnements alpha émis par un nucléide d'élément transuranien constitué de $^{241}$Am (3,43Ci/g) ajouté à la solution aqueuse.

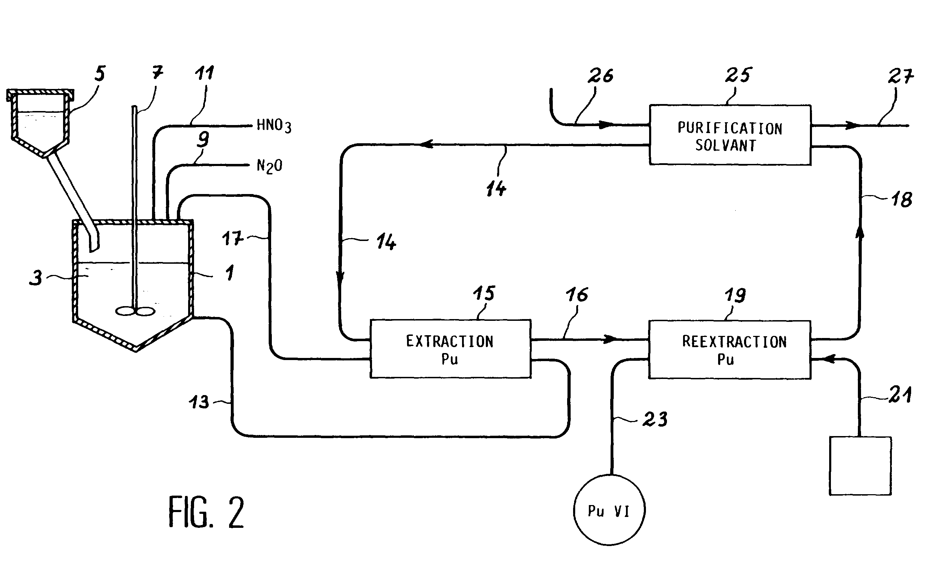

On peut réaliser la dissolution dans l'installation représentée sur la figure 2.

Sur cette figure, on a repris les mêmes références que celles de la figure 1 pour désigner les constituants de l'installation déjà représentés sur la figure 1.

La différence entre ces deux installations porte sur le traitement de la solution de plutonium soutirée du réacteur (1) par la conduite (13). Dans le cas de la figure 2, cette solution est soumise à un traitement d'extraction du plutonium (en 15), puis recyclée dans le réacteur (1) par la conduite (17) avec le nucléide qu'elle contient.

La solution aqueuse nitrique présente dans le réacteur (1) contient 6mol/l de HNO$_3$ et on y ajoute 1458g de $^{241}$Am pour avoir une activité totale de 5000Ci. Avec cette activité, on devrait atteindre une capacité de dissolution de 48g/h de PuO$_2$. Toutefois, la capacité de dissolution est seulement voisine de 25g/h.

Cette chute d'efficacité est imputable à la faible durée de vie des radicaux OH· dont environ la moitié de la population disparait avant d'atteindre le site réactionnel.

La solution nitrique contenant le plutonium (VI) soutiré par la conduite (13) est introduite dans une installation d'extraction liquide-liquide (15) où elle est mise en contact à contre-courant avec un solvant organique à base de tributyl phosphate introduit par la conduite (14). De la sorte on extrait le plutonium dans le solvant organique et on peut recycler dans le réacteur (1) par la conduite (17) la solution nitrique contenant l'américium-241. Le plutonium extrait dans le solvant organique sortant du stade d'extraction (15) par la conduite (16) peut être réextrait dans une solution aqueuse nitrique en (19) par mise en contact à contre-courant avec une solution nitrique introduite par la conduite (21) de façon à récupérer en (23) une solution de Pu (VI) purifiée. Le solvant organique sortant de l'installation de réextraction (19) par la conduite (18) peut être purifié en (25), par mise en contact avec une solution de lavage appropriée introduite en (26) et recueillie (en 27), puis recyclé (par 14) dans l'installation d'extraction du plutonium (15).

**Exemple 9.**

On suit le même mode opératoire que dans l'exemple 8 pour dissoudre PuO$_2$ mais on ajoute 59g de $^{244}$Cm (85Ci/g) au lieu de 1458g de $^{241}$Am.

Dans ces conditions, on devrait dissoudre 51g/h de PuO$_2$, mais dans la pratique, on obtient la dissolution de 25g/h de PuO$_2$.

**Exemple 10.**

Dans cet exemple on réalise la dissolution de PuO$_2$ en utilisant comme source de rayonnement, un émetteur bêta pur constitué par du strontium 90 dont la demi-période est de 28,15 ans et l'activité de 52Ci/g. L'énergie moyenne des rayonnements bêta est de 0,196MeV, ce qui correspond à un rendement de production des radicaux OH· de 1,16.10$^4$OH· par rayonnement β$^-$ absorbé ce qui correspond à un G$_{OH·}$ de 6.

Dans ce cas, on peut réaliser la dissolution comme dans l'exemple 8 dans l'installation représentée sur la figure 2 en remplaçant l'américium par le strontium-90. En utilisant une activité de 5000Ci de strontium-90, une solution à 6mol/l d'acide nitrique, saturée de N$_2$O et 0,1mol/l de nitrate d'argent, on dissout 1,73g de PuO$_2$/h à la température ambiante.

## Exemple 11.

Dans cet exemple, on suit le même mode opératoire que dans l'exemple 10, mais on utilise à la place du strontium-90, de l'yttrium-90. On obtient des résultats équivalents en utilisant une activité en yttrium-90 de 5000Ci.

## Exemple 12.

Cet exemple concerne la dissolution de la fraction de $PuO_2$ insoluble présente dans les fines de dissolution provenant de la dissolution nitrique de combustibles irradiés. Dans ce cas, les rayonnements sont produits par les émetteurs bêta et gamma présents dans les fines de dissolution ou la liqueur provenant de la dissolution.

Les rayonnements bêta et gamma produits par ces émetteurs ont en moyenne une énergie de 1,5MeV et l'action oxydante des radicaux OH· produits par ces rayonnements peut servir non seulement à la dissolution du $PuO_2$ mais également pour transformer le ruthénium de la liqueur ou des fines en $RuO_4$ qui est un composé volatil.

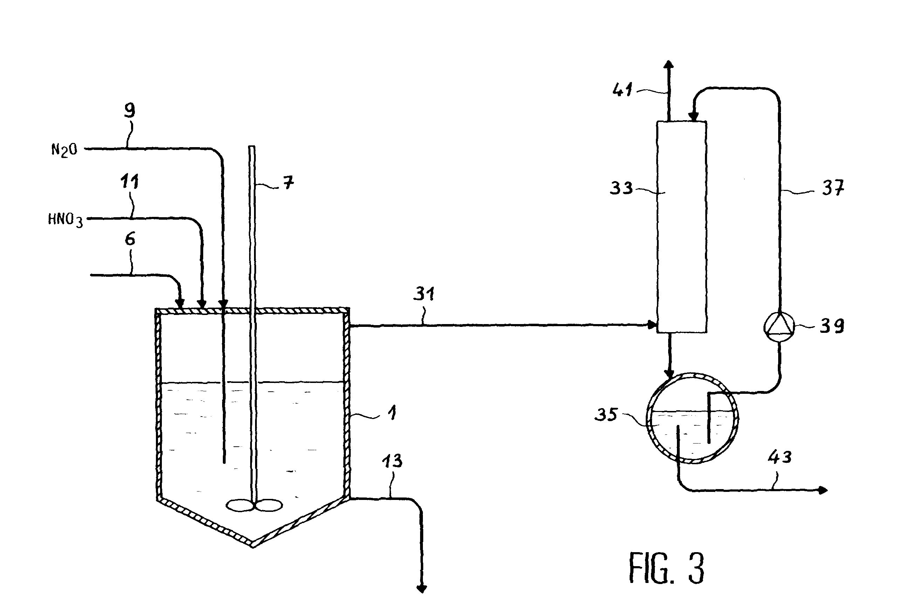

Ainsi, dans le cas de fines de dissolution ayant une activité spécifique égale à 100Ci/g, la capacité d'oxydation du ruthénium et du plutonium est égale au maximum à 50mg/h de ruthénium et 267mg/h de $PuO_2$. Pour effectuer cette dissolution, on peut utiliser l'installation représentée sur la figure 3.

Cette installation comprend un réacteur d'attaque (1) muni d'un agitateur (7) dans lequel on peut introduire la liqueur comportant les fines de dissolution par une conduite (6), de l'acide nitrique 6N par la conduite (11) et du $N_2O$ par la conduite (9). La solution de dissolution peut être soutirée par la conduite (13). Les produits volatils tels que le $RuO_4$ produits à la partie supérieure du réacteur peuvent être évacués par la conduite (31) vers une colonne de lavage (33) dans laquelle on lave les gaz par de la soude provenant d'un réservoir (35), et introduite à la partie supérieure de la colonne (33) par une conduite (37) munie d'une pompe (39). Les gaz lavés sont évacués par la conduite (41) tandis que le ruthénium est séparé à la base de la colonne par la conduite (43).

Lorsqu'on maintient les fines de dissolution dans la liqueur de dissolution du combustible saturée de $N_2O$, l'activité bêta-gamma des produits de fission en solution ajoute son effet à celui de l'activité bêta-gamma des fines elles-mêmes. Ainsi, pour un combustible UOX irradié à 33GWj/t et dissous à 5000l/t, l'activité spécifique du mélange de liqueur d'attaque et de fines (environ 0,74g de fines par litre de liqueur d'attaque), est voisine de 150Ci/l. Dans un tel milieu saturé de $N_2O$, la capacité d'élimination du ruthénium est de 75mg/h/l de liqueur d'attaque sous forme de $RuO_4$ volatil et la capacité de dissolution de $PuO_2$ est égale à 390mg de $PuO_2$/h/l de liqueur d'attaque. Dans la pratique les performances observables sont inférieures à ces valeurs.

## Exemple 13.

Dans cet exemple, on suit le même mode opératoire que dans l'exemple 12, en introduisant dans le réacteur les fines de dissolution avec la liqueur de dissolution mais on opère à 80°C de façon à bénéficier de l'effet du médiateur redox, cérium (produit de fission), présent dans la liqueur. Dans ce cas, la capacité d'élimination du ruthénium est égale à 75mg/h/l de liqueur d'attaque et la capacité de dissolution de $PuO_2$ est égale à 390mg de $PuO_2$/h/l de liqueur d'attaque.

En revanche, si l'on opère à la température ambiante, la capacité de dissolution de $PuO_2$ est réduite de moitié et la capacité d'élimination du ruthénium est réduite de 25%.

## Exemple 14.

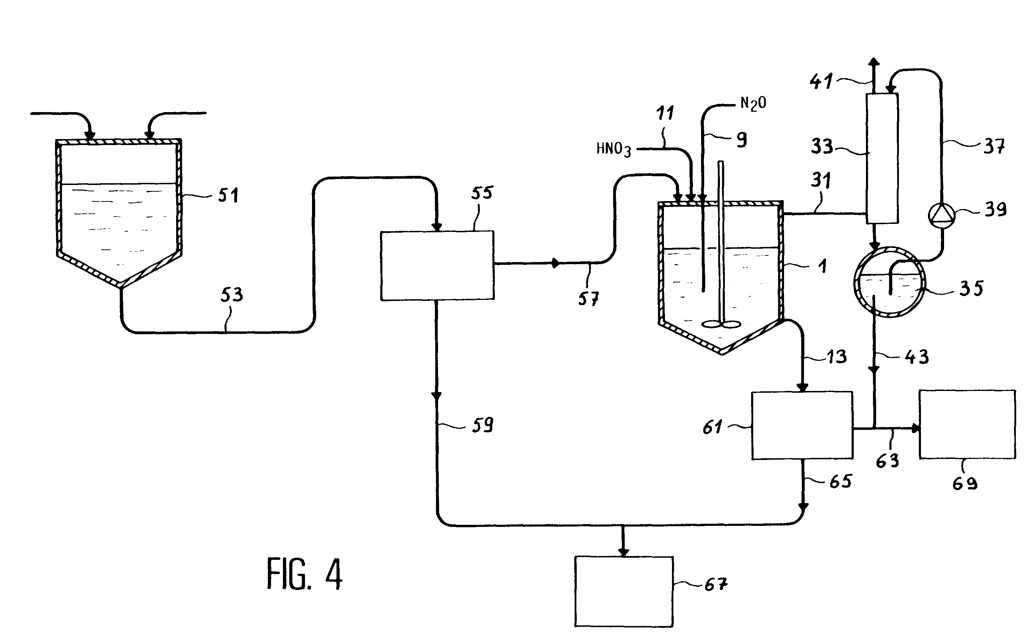

Dans cet exemple, on traite les fines de dissolution après les avoir séparées de la liqueur de dissolution en utilisant l'installation représentée sur la figure 4.

Sur cette figure, on a repris les mêmes références pour désigner les éléments de l'installation déjà représentés sur la figure 3.

Dans ce cas, les fines de dissolution qui sont produites avec la liqueur de dissolution dans le dissolveur (51) sont amenées par la conduite (53) dans une installation de séparation solide liquide (55), les fines de dissolution séparées étant introduites par la conduite (57) dans le réacteur d'attaque (1) et la liqueur de dissolution étant évacuée par la conduite (59). Dans le réacteur (1), les fines de dissolution sont mises en contact avec une solution nitrique saturée de $N_2O$ et la solution nitrique contenant le plutonium est évacuée par la conduite (13) avec les fines qui sont séparées de la solution dans le dispositif de séparation (61), les fines étant évacuées par la conduite (63) vers une installation de vitrification (69) tandis que la solution est évacuée par la conduite (65) avec la liqueur de dissolution de la conduite (59) vers une installation de traitement (67) pour récupérer le plutonium qu'elle contient. Le $RuO_4$ produit dans le réacteur (1) est évacué par la conduite (31), puis lavé dans la colonne (33) par de la soude, et récupéré dans la conduite (43) pour être dirigé avec les fines de dissolution de la conduite (63) vers une installation de vitrification (69).

## Exemple 15.

Dans cet exemple, on utilise le procédé de l'invention pour dissoudre le plutonium présent dans des déchets plutonifères constitués par des cendres d'incinération. Dans ce cas, on préfère utiliser une source de rayonnements externe provenant d'un irradiateur pour créer les radicaux OH· nécessaires à la dissolution du $PuO_2$.

Dans ce but, on utilise l'installation représentée sur la figure 1 mais le réacteur d'attaque (1) dont le volume utile est de 10l, est disposé dans la cavité d'un irradiateur délivrant un débit de dose de $10^5$Gy/h. On introduit les cendres provenant de la trémie d'alimentation (5) dans le réacteur (1) où elles sont mises en contact avec une solution aqueuse contenant 6mol/l d'acide nitrique, saturée de $N_2O$ et on soutire par la conduite (13) la solution nitrique contenant le plutonium. Dans ces conditions, on atteint une capacité de dissolution de 40g/h de $PuO_2$.

On pourrait normalement obtenir une capacité de dissolution de 84,1g de $PuO_2$/h, mais la présence d'une matrice inerte dans les déchets conduit à une capacité de dissolution inférieure.

On peut améliorer la capacité de dissolution en opérant en présence d'ions argent.

**Exemple 16.**

On suit le même mode opératoire que dans l'exemple 15, pour dissoudre le plutonium présent dans des déchets plutonifères, constitués par des cendres d'incinération, mais dans ce cas on utilise un accélérateur de particules pour produire des radicaux OH· dans la solution.

On peut opérer dans l'installation représentée sur la figure 1, mais dans ce cas, le réacteur (1) est associé à un accélérateur d'électrons produisant des électrons de 1,5MeV et dont le faisceau délivre un courant de 1mA. Ainsi, on produit $2.10^{24}$ OH·/h en solution, ce qui conduit à une capacité maximale de dissolution de $PuO_2$ en milieu nitrique saturé de $N_2O$, à la température ambiante, voisine de 454g/h. Toutefois, cette capacité de traitement n'est accessible qu'en présence d'un médiateur redox constitué par du nitrate d'argent à une concentration de 0,1mol/l.

En l'absence de ce médiateur, la capacité de dissolution est réduite environ de moitié.

**Revendications**

1. Procédé de dissolution du bioxyde de plutonium présent dans des produits solides, caractérisé en ce qu'il consiste

   a) à mettre en contact les produits solides avec une solution aqueuse d'acide nitrique soumise à des rayonnements ou à des particules chargées pour produire des radicaux libres OH· par radiolyse de cette solution, en présence d'un réactif capable de piéger les électrons solvatés et les radicaux H· produits simultanément, et
   b) à récupérer la solution aqueuse nitrique dans laquelle a été dissous le plutonium.

2. Procédé selon la revendication 1, caractérisé en ce que la solution aqueuse nitrique comprend de plus un médiateur redox ayant un potentiel d'oxydoréduction compris entre 1,43 et 2,6 V/ENH.

3. Procédé selon la revendication 2, caractérisé en ce que le médiateur redox est $Ag^I$.

4. Procédé selon l'une quelconque des revendications 1 à 3, caractérisé en ce que les rayonnements sont des rayonnements alpha.

5. Procédé selon la revendication 4, caractérisé en ce que les rayonnements alpha sont produits directement dans la solution par les nuclides de plutonium, présents dans les produits solides à dissoudre.

6. Procédé selon la revendication 4, caractérisé en ce que les rayonnements alpha sont produits par un émetteur alpha ajouté à la solution aqueuse nitrique.

7. Procédé selon la revendication 6, caractérisé en ce que l'émetteur alpha est l'américium-241, le curium-244 ou des nuclides de plutonium.

8. Procédé selon l'une quelconque des revendications 1 à 3, caractérisé en ce que les rayonnements sont des rayonnements $\beta^-$.

9. Procédé selon la revendication 8, caractérisé en ce que les rayonnements $\beta^-$ sont produits par un émetteur $\beta^-$ dissous dans la solution aqueuse nitrique.

10. Procédé selon la revendication 9, caractérisé en ce que l'émetteur $\beta^-$ est le strontium-90 ou l'yttrium-90.

11. Procédé selon l'une quelconque des revendications 1 à 3, caractérisé en ce que les particules chargées sont des électrons produits par un accélérateur d'électrons.

12. Procédé selon la revendication 1, caractérisé en ce que les rayonnements sont produits par une source de rayonnement externe à la solution.

13. Procédé selon l'une quelconque des revendications 1 à 12, caractérisé en ce que le réactif capable de piéger les électrons solvatés et les radicaux H· est le protoxyde d'azote $N_2O$.

14. Procédé selon l'une quelconque des revendications 1 à 13, caractérisé en ce que la concentration en acide nitrique de la solution aqueuse est de 2 à 6mol/l.

15. Procédé selon la revendication 3, caractérisé en ce que la concentration en argent de la solution aqueuse est de 0,01 à 0,1mol/l.

16. Procédé selon l'une quelconque des revendications 6 à 10, caractérisé en ce que l'on introduit en continu dans un réacteur contenant une solution aqueuse nitrique comprenant l'émetteur alpha ou bêta, les produits solides contenant le plutonium à dissoudre, de l'acide nitrique et l'agent capable de piéger les électrons solvatés et les radicaux H·, en ce que l'on soutire en continu du réacteur une partie de la solution, en ce que l'on sépare de la solution soutirée le plutonium qu'elle contient pour obtenir une solution appauvrie en Pu et en ce que l'on recycle dans le réacteur la solution ainsi appauvrie en plutonium.

17. Procédé selon la revendication 16, caractérisé en ce que l'on sépare le plutonium de la solution soutirée par extraction dans un solvant organique.

18. Procédé selon l'une quelconque des revendications 1 à 17, caractérisé en ce que les produits solides sont constitués uniquement de bioxyde de plutonium ou d'oxyde mixte de plutonium.

19. Procédé selon l'une quelconque des revendications 1 à 17, caractérisé en ce que les produits solides sont des fines de dissolution contenant du ruthénium et du plutonium et en ce que l'on sépare le ruthénium 'volatilisé et que l'on dissout le plutonium par réaction d'oxydation avec les radicaux OH· générés par radiolyse de la solution.

20. Procédé selon l'une quelconque des revendications 1 à 3, 11 à 15, caractérisé en ce que les produits solides sont des déchets plutonifères.

## Patentansprüche

1. Verfahren zur Auflösung von Plutoniumdioxid, welches in festen Produkten vorhanden ist, dadurch gekennzeichnet, daß es darin besteht

   a) die festen Produkte mit einer wäßrigen Lösung von Salpetersäure, welche Strahlungen oder geladenen Partikeln ausgesetzt wurde, um durch Radiolyse dieser Lösung freie OH··Radikale zu erzeugen, in Kontakt zu bringen, in Gegenwart eines Reagens, das imstande ist, die solvatisierten Elektronen und die gleichzeitig erzeugten H--Radikale abzufangen, und
   b) die salpetersaure wäßrige Lösung, in der das Plutonium gelöst wurde, zurückzugewinnen.

2. Verfahren nach Anspruch 1, dadurch gekennzeichnet, daß die salpetersaure wäßrige Lösung ferner einen Redox-Vermittler enthält, welcher ein Redoxpotential hat, das, bezogen auf die Normalwasserstoffelektrode, zwischen 1,43 und 2,6 V liegt.

3. Verfahren nach Anspruch 2, dadurch gekennzeichnet, daß der Redox-Vermittler $Ag^I$ ist.

4. Verfahren nach einem der Ansprüche 1 bis 3, dadurch gekennzeichnet, daß die Strahlungen Alpha-Strahlungen sind.

5. Verfahren nach Anspruch 4, dadurch gekennzeichnet, daß die Alpha-Strahlungen direkt in der Lösung durch die Plutoniumnuklide, die in den aufzulösenden festen Produkten vorhanden sind, erzeugt werden.

6. Verfahren nach Anspruch 4, dadurch gekennzeichnet, daß die Alpha-Strahlungen durch einen der salpetersauren wäßrigen Lösung zugesetzten Alpha-Strahler erzeugt werden.

7. Verfahren nach Anspruch 6, dadurch gekennzeichnet, daß der Alpha-Strahler Americium-241, Curium-244 oder eines oder mehrere der Plutoniumnuklide ist.

8. Verfahren nach einem der Ansprüche 1 bis 3, dadurch gekennzeichnet, daß die Strahlungen β⁻-Strahlungen sind.

9. Verfahren nach Anspruch 8, dadurch gekennzeichnet, daß die β⁻-Strahlungen durch einen in der salpetersauren wäßrigen Lösung gelösten β⁻-Strahler erzeugt werden.

10. Verfahren nach Anspruch 9, dadurch gekennzeichnet, daß der β⁻-Strahler Strontium-90 oder Yttrium-90 ist.

11. Verfahren nach einem der Ansprüche 1 bis 3, dadurch gekennzeichnet, daß die geladenen Partikel von einen Elektronenbeschleuniger erzeugte Elektronen sind.

12. Verfahren nach Anspruch 1, dadurch gekennzeichnet, daß die Strahlungen von einer Strahlungsquelle außerhalb der Lösung erzeugt werden.

13. Verfahren nach einem der Ansprüche 1 bis 12, dadurch gekennzeichnet, daß das Reagens, das imstande ist, die solvatisierten Elektronen und die H··Radikale abzufangen, Distickstoffoxid $N_2O$ ist.

14. Verfahren nach einem der Ansprüche 1 bis 13, dadurch gekennzeichnet, daß die Salpetersäurekonzentration der wäßrigen Lösung 2 bis 6 mol/l beträgt.

15. Verfahren nach Anspruch 3, dadurch gekennzeichnet, daß die Silberkonzentration der wäßrigen Lösung 0,01 bis 0,1 mol/l beträgt.

**16.** Verfahren nach einem der Ansprüche 6 bis 10, dadurch gekennzeichnet, daß man in einen Reaktor, der eine salpetersaure wäßrige, den Alpha- oder Beta-Strahler enthaltende Lösung enthält, die das aufzulösende Plutonium enthaltenden festen Produkte, Salpetersäure und das Reagens, das imstande ist, die solvatisierten Elektronen und die H·-Radikale abzufangen, kontinuierlich hineingibt, daß man von dem Reaktor kontinuierlich einen Teil der Lösung abzieht, daß man von der abgezogenen Lösung das Plutonium, das sie enthält, abtrennt, um eine an Pu verarmte Lösung zu erhalten, und daß man die derart an Plutonium verarmte Lösung in den Reaktor zurückleitet.

**17.** Verfahren nach Anspruch 16, dadurch gekennzeichnet, daß man das Plutonium von der abgezogenen Lösung durch Extraktion in einem organischen Lösungsmittel abtrennt.

**18.** Verfahren nach einem der Ansprüche 1 bis 17, dadurch gekennzeichnet, daß die festen Produkte ausschließlich aus Plutoniumdioxid und aus Plutonium-Mischoxid bestehen.

**19.** Verfahren nach einem der Ansprüche 1 bis 17, dadurch gekennzeichnet, daß die festen Produkte Auflösungsschlämme sind, die Ruthenium und Plutonium enthalten, und dadurch, daß man das flüchtig gemachte Ruthenium abtrennt und daß man das Plutonium durch Oxidationsreaktion mit den durch Radiolyse der Lösung erzeugten OH·-Radikalen auflöst.

**20.** Verfahren nach einem der Ansprüche 1 bis 3, 11 bis 15, dadurch gekennzeichnet, daß die festen Produkte plutoniumhaltige Abfälle sind.

**Claims**

**1.** Process for dissolving the plutonium dioxide present in solid products,
characterized in that it comprises

a) contacting the solid products with an aqueous nitric acid solution subject to radiation or charged particles, producing free OH⁻ radicals by radiolysis of said solution, in the presence of a reagent able to trap the very reducing species, such as solvated electrons and the H⁻ radicals siultaneously produced and
b) recovering the nitric aqueous solution in which has been dissolved the plutonium.

**2.** Process according to claim 1, characterized in that the aqueous nitric solution also contains a redox mediator having a redox potential between 1.43 and 2.6 V/ENH.

**3.** Process according to claim 2, characterized in that the redox mediator is Ag$^I$.

**4.** Process according to any one of the claims 1 to 3, characterized in that the rays are alpha rays.

**5.** Process according to claim 4, characterized in that the alpha rays are produced directly in the solution by plutonium nuclides present in the solid products to be dissolved.

**6.** Process according to claim 4, characterized in that the alpha rays are produced by an alpha emitter added to the aqueous nitric solution.

**7.** Process according to claim 6, characterized in that the alpha emitter is americium 241, curium 244 or plutonium nuclides.

**8.** Process according to any one of the claims 1 to 3, characterized in that the rays are β⁻ rays.

**9.** Process according to claim 8, characterized in that the β⁻ rays are produced by a β⁻ emitter dissolved in the aqueous nitric solution.

**10.** Process according to claim 9, characterized in that the β⁻ emitter is strontium 90 or yttrium 90.

**11.** Process according to any one of the claims 1 to 3, characterized in that the charged particles are electrons produced by an electron accelerator.

**12.** Process according to claim 1, characterized in that the rays are produced by a radiation source outside the solution.

**13.** Process according to any one of the claims 1 to 12, characterized in that the reagent able to trap the solvated electrons and the H radicals is nitrogen protoxide $N_2O$.

**14.** Process according to any one of the claims 1 to 13, characterized in that the nitric acid concentration of the aqueous solution is 2 to 6 mole/l.

**15.** Process according to claim 3, characterized in that the silver concentration of the aqueous solution is 0.01 to 0.1 mole/l.

**16.** Process according to any one of the claims 6 to 10, characterized in that continuous introduction takes place into a reactor containing an aqueous nitric solution incorporating the alpha or beta emitter of the solid products containing the plutonium to be dissolved, the nitric acid and the agent able to trap the solvated electrons and the H⁻ radicals, in that from the reactor is continuously withdrawn part of the solution, in that from the withdrawn solution is separated the plutonium contained therein in order to obtain a Pu-depleted solution and in that the thus plutonium depleted solution is recycled into the reactor.

17. Process according to claim 16, characterized in that the plutonium is separated from the drawn off solution by extraction in an organic solvent.

18. Process according to any one of the claims 1 to 17, characterized in that the solid products are constituted solely by plutonium dioxide or mixed plutonium oxide.

19. Process according to any one of the claims 1 to 17, characterized in that the solid products are dissolving fines containing ruthenium and plutonium and in that the volatilized ruthenium is separated and the plutonium dissolved by oxidation reaction with OH⁻ radicals generated by radiolysis of the solution.

20. Process according to any one of the claims 1 to 3, 11 to 15, characterized in that the solid products are plutoniferous waste.

FIG.1

HNO₃

N₂O

FIG. 2

HNO₃

N₂O

PURIFICATION
SOLVANT

EXTRACTION
Pu

REEXTRACTION
Pu

Pu VI

EP 0 559 561 B1

FIG. 3

FIG. 4